# EUROPEAN PATENT SPECIFICATION

(11) **EP 1 894 779 B1**
(45) Date of publication and mention of the grant of the patent: **25.11.2009**
(21) Application number: 06018338.1
(22) Date of filing: 01.09.2006
(51) Int. Cl.: B60R 1/00

(54) **Method of operating a night-view system in a vehicle and corresponding night-view system**
Verfahren zum Betreiben eines Nachtsichtsystems in einem Kraftfahrzeug und entsprechendes Nachtsichtsystem
Procédé de fonctionnement d'un système de vision de nuit dans un véhicule et système de vision de nuit correspondant

(43) Date of publication of application: 05.03.2008
(73) Proprietor: Harman Becker Automotive Systems GmbH, 76307 Karlsbad (DE)
(72) Inventor: Ebner, Roland, 72622 Zizishausen (DE)
(74) Representative: Bertsch, Florian Oliver

(56) References cited:
- EP-A2- 1 024 057
- DE-A1- 19 950 033
- FR-A1- 2 785 434
- US-A1- 2004 066 376

## Description

The present invention relates to a method of operating a night-view system in a vehicle and to a corresponding night-view system. In particular, the invention relates to a method and a device which offer enhanced display qualities.

### Background art

In the field of motor vehicles, such as cars, it is known to provide a motor vehicle with a so-called night-view system for enhancing the driver's view at night. By this means, it is possible to increase the security by reducing the number of accidents due to poor sight conditions. Further, a night-view system may increase the comfort of the driver when driving at night, as the night-view system allows the driver to monitor the vehicle environment in a much more relaxed way. Night-view systems are typically based on specific night-view sensors, such as infrared cameras, which allow for providing an image even in the absence of visible light.

However, the image provided by means of a night-view sensor may often be very dissimilar to an image as provided by means of a conventional optical imaging device operating in the visible range of the electromagnetic spectrum. Therefore, orientation in the night-view image may sometimes be difficult. Further, some relevant structures, such as the road surface or road edges, cause only weak contrasts in the night-view image so that it is difficult for the driver to recognize relevant structures.

In view of the above, one idea is to highlight in the night-view image the course of the road on which the motor vehicle is moving. This requires a reliable detection of the course of the road in the night-view image, which is difficult to achieve using existing techniques.

Hence, there is a need in the art to improve the operation of a night-view system in such a way that the course of the road on which the motor vehicle is moving can be reliably detected and displayed together with the night-view image.

The closest prior-art document EP 0 406 946 A discloses a method of operating a night-view system in a vehicle, comprising:
providing a video image of the vehicle environment using a night-view sensor,
retrieving information on the course of a road on which the vehicle moves from a navigation device,
processing the video image so as to detect the course of the road taking into account the information retrieved from the navigation device (15), and
displaying the video image and the detected course of the road (5) on a
display device (20) within the course of the road superposed onto the video image.

In US 2004/0066376 A1 a mobility assist device is disclosed. The mobility assist device provides a conformal, augmented display for the driver of a motor vehicle. In the device, a projector receives a video display, signal from a controller and projects road data onto a combiner. Road data, such as lane boundaries, are projected from the projector in proper perspective onto the combiner such that the lane boundaries appear to substantially overly those which the driver actually sees. The projected road data is obtained from a geospatial database. In addition, a ranging system may be used to detect targets in the vicinity of the vehicle, and icons representing the targets can be projected onto the display as well.

In FR 2 785 434 a drive-assist method is disclosed. The method involves visualizing the road scenery. A sensor is used which delivers information on the vehicle environment. The detection field of visualizing means is controlled in real time depending on driving conditions of the vehicle in the determined road environment. For example, the focal distance of a camera is varied.

In DE 199 50 033 A1 a camera device for vehicles is disclosed. The camera device comprises a camera which can be variably oriented so as to sense the course of the road in front of a vehicle. In order to improve the imaging characteristics, it is proposed to control the orientation of the camera on the basis of dynamic driving parameters of the vehicle or on the basis of satellite-based information. The camera may be an infrared camera.

In EP 1 024 057 A2 a display apparatus on a vehicle is disclosed. Using infrared arrays, an image ahead of the vehicle is sensed and the sensed image is displayed so as to be visible for a driver of the vehicle. A surrounding environment of the vehicle is detected and the display is controlled on the basis of the detected surrounding environment. For detecting the surrounding environment, a GPS sensor may be used. Depending on the surrounding environment, the characteristics of the displayed image are adjusted.

### Short summary of the invention

According to the present invention, the above need is addressed by a method of operating a night-view system and by a night-view system as specified in the independent claims. The dependent claims define preferred or advantageous embodiments of the invention.

According to the invention, a method of operating a night-view system in a vehicle comprises providing a video image of the vehicle environment, in particular in front of the vehicle, by means of a night-view sensor, i.e. providing a night-view image, retrieving information on the course of a road on which the vehicle moves from a navigation device, processing the video image so as to detect the course of the road taking into account the information retrieved from the navigation device, and displaying the video image and the detected course of the road on a display device. In particular, the detected course of the road is superposed onto the video image, thereby highlighting the course of the road in the video image.

The above approach provides significant advantages as to the displayed night-view image of the vehicle environment. In particular, orientation of the driver in the displayed night-view image is facilitated. By using the supplemental information on the course of the road provided by the navigation device, the reliability of the detection of the course of the road is significantly improved. In particular, the course of the road can be displayed even in cases when the detection is not possible on the mere basis of contrast information. This may be the case, for example, at crossings or junctions in the course of the road, if the width of the road abruptly varies, or if the course of the road passes through a peak, which means that the course of the road beyond the peak is not visible in the night-view image. Accordingly, the information on the course of the road retrieved from the navigation device preferably includes information on the presence of crossings or junctions in the course of the road, information on the width of the road, and/or a height information of the course of the road.

According to an embodiment, the information retrieved from the navigation system also includes information on the vehicle position relative to the course of the road. Such information may be provided by a satellite navigation system of the navigation device, e.g. on the basis of the global positioning system (GPS). In this case, it is preferred not only to provide information with respect to the longitudinal position of the vehicle, i.e. the position along the direction of the course of the road, but also with respect to the lateral direction, i.e. relative to edges of the road. Using such information, it is possible to make a prediction in which areas of the night-view image relevant structures, such as edges of the road, are to be expected, which improves the reliability of detection.

According to an embodiment, processing of the night-view image is performed also taking into account information on the orientation or attitude of the vehicle. In particular, such information may include an inclination of the vehicle in the longitudinal and/or lateral direction, as typically caused by a vehicle acceleration, a vehicle deceleration, or left and right steering movements of the vehicle. As these inclinations and different vehicle orientations with respect to the course of the road influence the appearance of the course of the road in the night-view image, it is advantageous to take into account the information on these inclinations during processing of the night-view image.

According to an embodiment, a two-stage process is employed for processing the video image. That is to say, initially the course of the road is detected in the video image by evaluating contrast information. In addition, an expected course of the road in the night-view image is calculated on the basis of the information retrieved from the navigation device. Then, the course of the road as detected on the basis of contrast information is matched with the expected course of the road. In this way, any remaining shifts or deviations between the detected course of the road and the actual course of the road can be reduced. The above process of matching is preferably repeated at suitable intervals, thereby allowing to continuously maintain a high level of accuracy.

According to an embodiment, the method also comprises processing of the night-view image so as to automatically detect objects near or on the course of the road and providing a warning to a vehicle user if an object is detected near or on the course of the road. The warning may be provided by means of an acoustical signal or by means of an optical signal on the display device, e.g. by highlighting the detected object in the displayed night-view image. In this way, the level of security may be further enhanced.

According to an embodiment, the method involves using the same display device for displaying the night-view image and the detected course of the road, and for displaying information of the navigation device, e.g. driver instructions, traffic warnings or the like. The approach of using a common display device for the night-view system and for the navigation device, on the one hand is advantageous with respect to hardware outlay and associated costs. Namely, it can be avoided that multiple display devices have to be provided, and the number of required components is reduced. On the other hand, the driver's comfort is improved. Namely, the driver will not have to concentrate on multiple display devices, but may focus on a single display device which displays all the relevant information with respect to driving and navigating the vehicle. The display device may comprise a head-up display which allows for displaying images and other information on the windscreen of the vehicle.

According to an embodiment, the invention also provides a night-view system which preferably is configured to operate according to the above-described method. In particular, the night-view system comprises a night-view sensor for providing a video image, or a night-view image, of the vehicle environment, video processing means configured to process the video image so as to detect the course of the road on which the vehicle moves taking into account information on the course of the road received from a navigation device, and a display device for displaying the video image and the detected course of the road.

The night-view system may also comprise data processing means configured to retrieve said information on the course of the road from the navigation device. Using the data processing means, data from the navigation device may be conditioned for the purpose of video processing. This may be particularly advantageous if the navigation device constitutes an external component with respect to the night-view system and adaptation of data formats is necessary. Of course, the navigation device may also be an integral component of the night-view system. Preferably, the navigation device comprises a satellite navigation function, e.g. a GPS function, which allows for a precise localization of the vehicle on a digital map representation stored in the navigation device. The digital map data stored in the navigation device preferably also includes the information on the course of the road which is used in the processing of the night-view image.

Preferably, the night-view sensor operates in at least one of the far-infrared range or near-infrared range of the electromagnetic spectrum. Of course, it is also conceivable to provide a sensor which operates in both ranges or to provide multiple night-view sensors operating in different ranges of the electromagnetic spectrum. Each range may offer specific advantages as to the recognition of objects in the night-view image. For example, in the far-infrared range, living objects such as humans or animals will cause a high contrast, which facilitates their recognition. On the other hand, in the near-infrared spectrum, a night-view image is provided which is more similar to an image in the visible range of the electromagnetic spectrum, which further facilitates orientation in the night-view image. Specifically in case of using a sensor operating in the near-infrared range of the electromagnetic spectrum, it is advantageous to additionally provide a source of infrared radiation for illuminating the vehicle environment to be imaged.

In addition, the invention also relates to a motor vehicle comprising the above-mentioned night-view system. If the motor vehicle additionally comprises a navigation system, it is advantageous to provide a common display device for the night-view system and for the navigation system, thereby reducing hardware outlay and associated costs and increasing the driver's comfort.

In the following, preferred and advantageous embodiments of the present invention will be described with reference to the accompanying drawings.

### Brief description of the drawings

Fig. 1 is a schematic representation of a motor vehicle moving on a road, including a range of detection of a night-view sensor provided onboard the motor vehicle.
Figs. 2A and 2B are schematic representations of a video image including the course of a road on which a motor vehicle moves, the video image being provided by means of a night-view sensor.
Fig. 3 is a block diagram schematically showing a night-view system according to an embodiment of the invention.
Fig. 4 is a flow chart schematically illustrating a method of operating a night-view system according to an embodiment of the invention.

### Detailed description of preferred embodiments

Hereinafter, preferred or advantageous embodiments of the present invention will be described by means of non-limiting examples and with reference to the accompanying drawings.

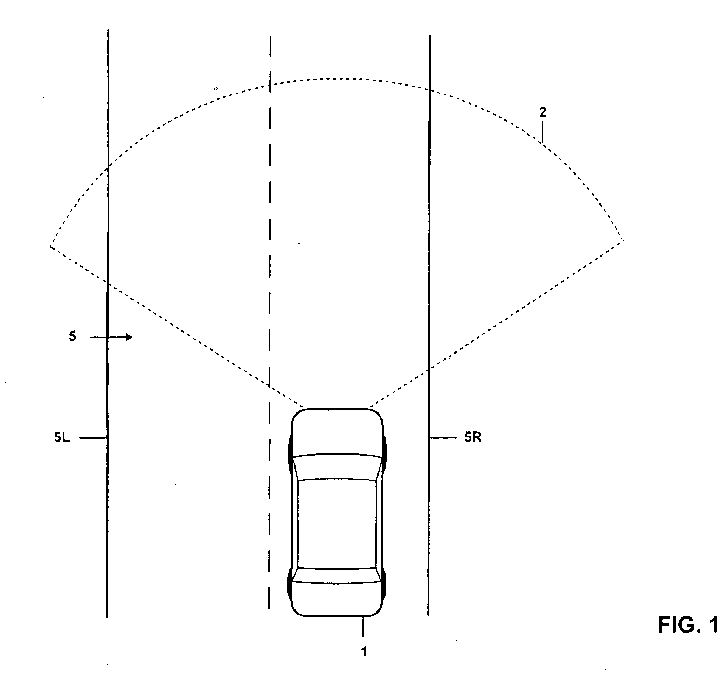

Fig. 1 schematically represents a motor vehicle 1 equipped with a night-view system, said vehicle 1 moving on a road 5. Fig. 1 also shows a range of detection 2 of a night-view sensor of the night-view system, said range of detection 2 being illustrated by a dashed line. For a typical width of the road 5, the range of detection 2 covers both a left road edge 5L and a right road edge 5R. The range of detection 2 extends forward from the vehicle 1 and therefore covers the vehicle environment in the direction of movement of the vehicle 1. Of course, it is also conceivable to provide night-view sensors covering the area behind the vehicle 1.

In the vehicle 1, the night-view sensor is preferably installed at a position which allows for a good coverage of the area in front of the vehicle 1, e.g. close to an upper position of the windshield, close to the rear view mirror or the sun visor. These positions allow for a field of view which is very similar to the driver's natural field of view.

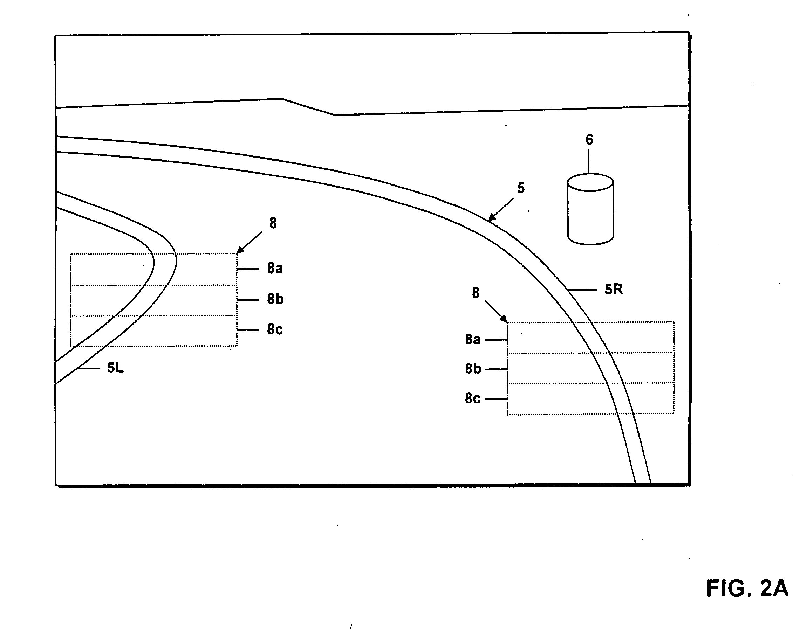

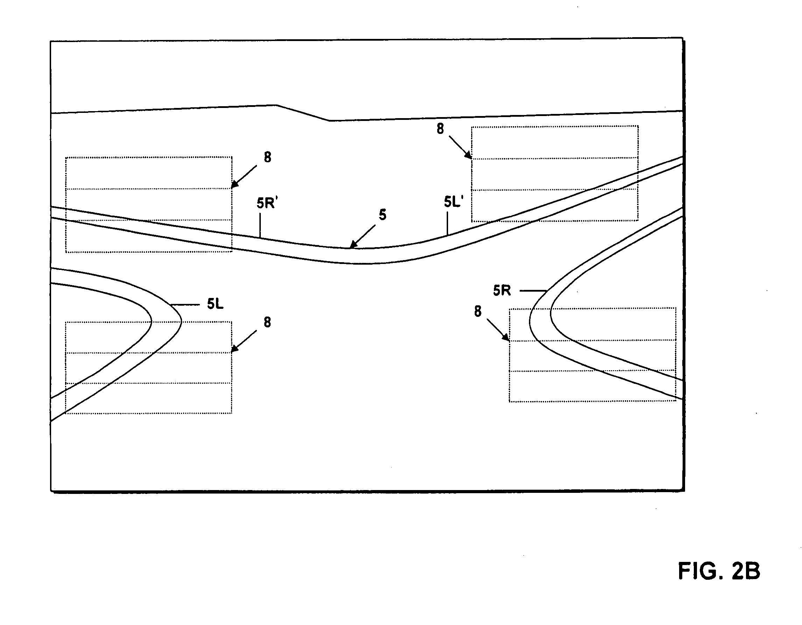

Figs. 2A and 2B show exemplary video images as provided by the night-view system of the vehicle 1, i.e. night-view images. It should be understood that in the night-view system as explained in the following, actually a sequence of images is continuously provided. That is to say, the video image actually comprises a sequence of images, which are evaluated and displayed in real time.

The exemplary night-view image of Fig. 2A shows the road 5 which is bounded by the left road edge 5L and the right road edge 5R. Further, the image includes an object 6, which in the illustrated example is near the right road edge 5R. As viewed on a display device of the night-view system, the night-view image will typically have the form of a grayscale representation or the like, in which the structures as schematically represented the figure are contrasts between different shades of gray or other color. The contrasts may in the night-view image be very weak and may vary from the contrasts as present in an image detected in the visible range of the electromagnetic spectrum. Therefore, operation of the night-view system involves detecting, i.e. identifying, the course of the road 5 in the night-view image and displaying the detected course of the road 5 superposed onto the night-view image so as to facilitate orientation in the night-view image.

Generally, the course of the road 5 is identified using the contrasts due to the left road edge 5L and due to the right road edge 5R. As to the detected course of the road 5, this may be displayed in form of lines representing the left road edge 5L and right road edge 5R, or in the form of a solid surface representing the area between the left road edge 5L and the right road edge 5R, e.g. using a color which provides a sufficient contrast with respect to the grayscale representation of the night-view image. However, displaying only the left road edges may be advantageous as it does not "hide" any image information contained in the area between the left road edge 5L and the right road edge 5R, for example due to an obstacle on the road.

In addition, the night-view image may also be evaluated so as to automatically detect additional objects, such as the object 6 illustrated in Fig. 2A. If an object is detected on or near the course of the road 5, the object may be highlighted and/or a warning may be provided to the driver, e.g. by means of an acoustical signal.

In any case, detecting the course of the road 5 in the night-view image and highlighting the course of the road by superposing the detected course of the road onto the night-view image allows for better distinguishing between the relevant objects and the background of the night-view image. Further, orientation in the night-view image is facilitated. This is particularly advantageous in case of night-view images detected by means of a far-infrared sensor which provides contrasts which are significantly different from those as present in images detected in the visible range of the electromagnetic spectrum.

In the method of operating the night-view system as described herein, detecting the course of the road 5 involves in a first stage processing the night-view image on the basis of contrast information. Preferably, this is accomplished using evaluation windows 8 having multiple evaluation rows 8a, 8b, 8c and by suitably filtering the image data, e.g. using Kalman filters. In this way, the contrast due to the left road edge 5L and right road edge 5R can be enhanced and the effects due to the movements of the vehicle on the road 5 can be taken into account. By using evaluation windows 8 which are placed in areas of the night-view image where the road edges are to be expected, the evaluation can be simplified and the speed of evaluation can be increased.

As illustrated in Fig. 2A, the evaluation windows 8 constitute portions of the night-view image in which relevant contrasts for detecting the course of the road 5 are expected. As the size of the evaluation windows 8 is smaller than the overall size of the night-view image, evaluation time as compared to an evaluation of the entire night-view image can be reduced and/or the resolution of evaluation can be increased without adversely affecting the performance. Generally, suitable positions of the evaluation windows 8 are the lower left portion and the lower right portion of the night-view image.

As illustrated, the evaluation windows have a generally rectangular shape. The evaluation windows are preferably subdivided into evaluation rows 8a, 8b, 8c, which extend in the horizontal direction of the night-view image. The use of such horizontally extending evaluation rows provides particular advantages as to the detection of substantially vertical structure such as the road edges 5L, 5R.

However, merely using the contrast information in the night-view image in some cases provides poor results as the contrasts are insufficient, or may even be impossible, e.g. when the course of the road passes a peak which means that a portion of the left road edge 5L or the right road edge 5R is located beneath the peak and unavailable for evaluation. Other situations which adversely affect the detection of the left road edge 5L and the right road edge 5R on the basis of contrast information are the presence of crossings or junctions in the course of the road 5 or abrupt variations of the width of the road 5. Further, disturbances can be caused by changes in the surface of the road due to damage or different materials. Due to the above effects, the course of the road as detected merely on the basis of contrast information in the night-view image may have a disturbed and nervous appearance when displayed. Therefore, the operating method and night-view system as described herein additionally involve using information on the course of the road as provided by a navigation device or navigation system of the vehicle when detecting the course of the road in the night-view image. For example, the additional information may be used to adjust the sizes and/or positions of the evaluation windows 8.

Fig. 2B schematically illustrates a further example of a night-view image, similar to that of Fig. 2A. However, as compared to Fig. 2A, in Fig. 2B the course of the road 5 includes a junction. As can be seen, the appearance of the structures in the night-view image is more complicated than in the case of Fig. 2A, where no junction is present in the course of the road 5. In particular, the number of road edges is effectively increased. As illustrated in Fig. 2B, there is a first portion of the left road edge 5L and a second portion of the left road edge 5L'. Similarly, there is a first portion of the right road edge 5R and a second portion of the right road edge 5R'. Between these portions, at the position of the junction, there is an interruption. Obviously, the evaluation of the night-view image so as to detect the course of the road 5 is more complicated in the case of Fig. 2B. Therefore, the method as proposed herein includes taking into account information on the course of the road 5 as provided by a navigation device, in particular on the presence of a junction or crossing as illustrated in Fig. 2B. In such a case, the evaluation can be adapted to the presence of the junction, for example by including additional evaluation windows 8 so as to detect additional road edges. Further, the sizes and/or positions of the evaluation windows 8 can be adjusted according to the information on the course of the road 5 as received from the navigation device.

Preferably, also a height information on the course of the road 5 and/or information on the width of the road 5 is taken into account when evaluating the night-view image. Generally, variations of the height or road width in the course of the road 5 will influence the appearance of the course of the road 5 in the night-view image. For example, there may be perspective distortions, or the course of the road 5 may "disappear" beyond a peak. By using the information as provided by the navigation device, this is taken into account during evaluation of the night-view image. Preferably, this is accomplished by calculating an expected course of the road 5 using the information as received from the navigation device and comparing the expected course of the road with the structures as detected in the night-view image. On the one hand, the expected course of the road 5 may serve as a basis for positioning the evaluation windows 8. On the other hand, if road edges are detected in the night-view image, it is possible to match these detected road edges with the expected course of the road 5. That is to say, the expected structures are brought into alignment with the features detected in the night-view image. This significantly increases the accuracy of detection as the expected course of the road is less susceptible to disturbances. A nervous appearance of the detected course of the road 5 as displayed is avoided and it is thus possible for the driver to reliably recognize objects near or on the course of the road 5, such as the object 6 illustrated in Fig. 2A.

Further, typically also the orientation or attitude of the vehicle 1 moving on the road 5 may change. That is to say, there may be an inclination of the vehicle 1 in the longitudinal or lateral direction and there may be different orientations of the vehicle 1 with respect to the course of the road, which influences the appearance of the night-view image. Accordingly, preferably also information on the orientation and/or attitude of the vehicle is taken into account during evaluation of the night-view image. This may be accomplished as explained above by comparing and matching the expected course of the road with features of the night-view image.

Preferably, the evaluation also takes into account a user-selected navigation route. Using the information, future navigation movements of the vehicle can be anticipated in the evaluation, e.g. by assigning a higher priority to a region of the night-view image into which the vehicle is expected to move when following the selected navigation route.

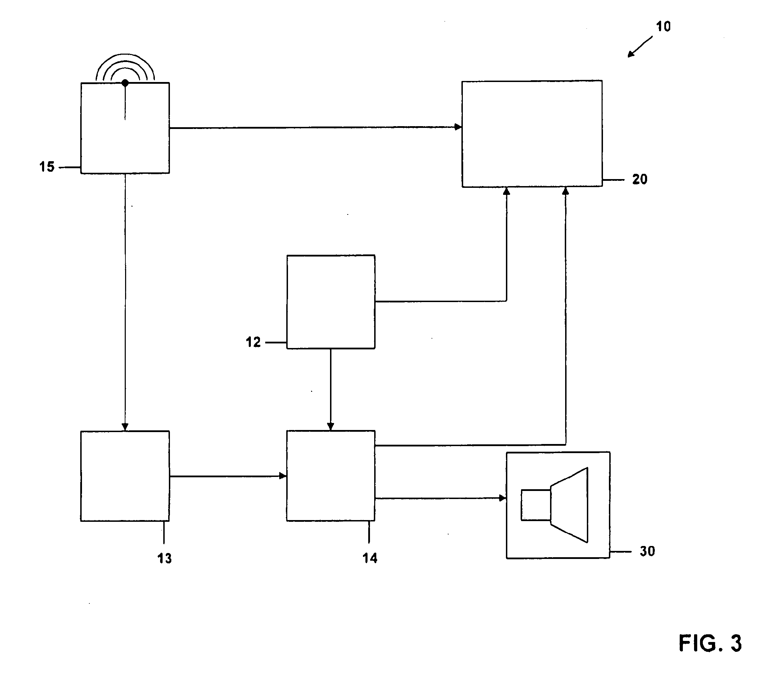

Fig. 3 shows a block diagram schematically representing a night-view system 10 operating according to the principles as explained above. As illustrated, the night-view system 10 comprises a night-view sensor 12, which preferably operates in the far-infrared range and/or the near-infrared range of the electromagnetic spectrum, a video processing device 14, and a display device 20. The night-view sensor 12 provides a video signal representative of the night-view image to the video processing device 14. Further, a video signal representative of the night-view image is provided to the display device 20.

The display device 20 may be a so-called head-up display which projects an image onto the windscreen of the vehicle.

Further, the night-view system 10 comprises a data processing device 13 which is connected to a navigation device 15 so as to receive an information signal. The information signal received from the navigation device 15 includes information on the position of the vehicle relative to the course of the road on which the vehicle moves, a height information of the course of the road, information on the presence of crossings or junctions in the course of the road, information on the width of the road, information on the attitude of the vehicle, and information on a user-selected navigation route stored in the navigation device 15. The navigation device 15 may be a component of the night-view system 10 or may be an external component, e.g. a part of a navigation system of a vehicle or a portable navigation system.

The navigation device 15 preferably includes a satellite navigation function, e.g. a GPS function, which allows for accurately determining the position of the vehicle in a digital map representation. The digital map representation is stored in a suitable storage device of the navigation device 15, such as a hard disc device, a CD-ROM device, a DVD device or other suitable memory device. The digital map representation includes the above-mentioned information on the course of the road, in particular on the presence of crossings or junctions, the height information and information on the width of the road. The navigation device 15 also comprises orientation and attitude sensors, such as a gyroscopic device, which provide information on the orientation and attitude of the vehicle.

The information signal is received by the data processing device 13 and processed so as to be suitably conditioned to be used in processing the night-view image provided by the night-view sensor 12. From the data processing device 13, a corresponding conditioned information signal is supplied to the video processing device 14, which also receives the video signal from the night-view sensor 12. The video processing device 14 performs the essential evaluation of the night-view image, taking into account the information as provided by the navigation device 15 and conditioned by the data processing device 13. As an output, the video processing device 14 provides a signal representative of the detected course of the road which is supplied to the display device 20 so as to be displayed together with the night-view image.

In the display device, the night-view image as provided by the night-view sensor 12 and the detected course of the road as provided by the video processing device 14 are superposed so as to generate a single image representation which offers a significantly improved orientation as compared to the bare night-view image.

In the embodiment, the display device 20 is configured as a multipurpose display commonly used by the navigation device 15 and the night-view system 10. That is to say, the display device 20 also receives an input signal directly from the navigation device 15 so as to display navigation information such as driver instructions or traffic information. By means of the common display device, it is not required to provide multiple displays in the vehicle, thereby reducing hardware requirements and increasing the driver's comfort.

Preferably, the video processing device 14 also performs additional image analysis functions. In particular, the night-view image may be analyzed so as to identify objects which are located near or on the detected course of the road. For example, such objects may be animals, humans or other vehicles. In order to reduce the risk of a collision with such an object, the video processing device initiates a warning if such an object is detected. In the embodiment, the warning may involve highlighting the detected object in the displayed night-view image and/or providing an acoustical warning. For the latter purpose, the night-view system is connected to a loudspeaker device 30 which outputs the acoustical warning. The loudspeaker device 30 may be a component of the night-view system 10 or may be a separate component, e.g. part of a vehicle entertainment system. The loudspeaker device 30 may also be used for acoustical output of said navigation information.

As illustrated, core components of the night-view system 10 are the data processing device 13, the video processing device 14, the night-view sensor 12, and the display device 20. However, it is not necessary that these components are specifically dedicated to the night-view system 10. Rather, they may be commonly used by other vehicle systems, such as a navigation system, an entertainment system, a security system, or a multimedia system. That is to say, the night-view system 10 may be integrated with other vehicle systems, there by reducing hardware outlay and associated costs.

Also, it is to be understood that the data processing device 13 and the video processing device 14 may actually be implemented by means of a single microprocessor. The single microprocessor may also be used to perform processing tasks of the navigation device 15.

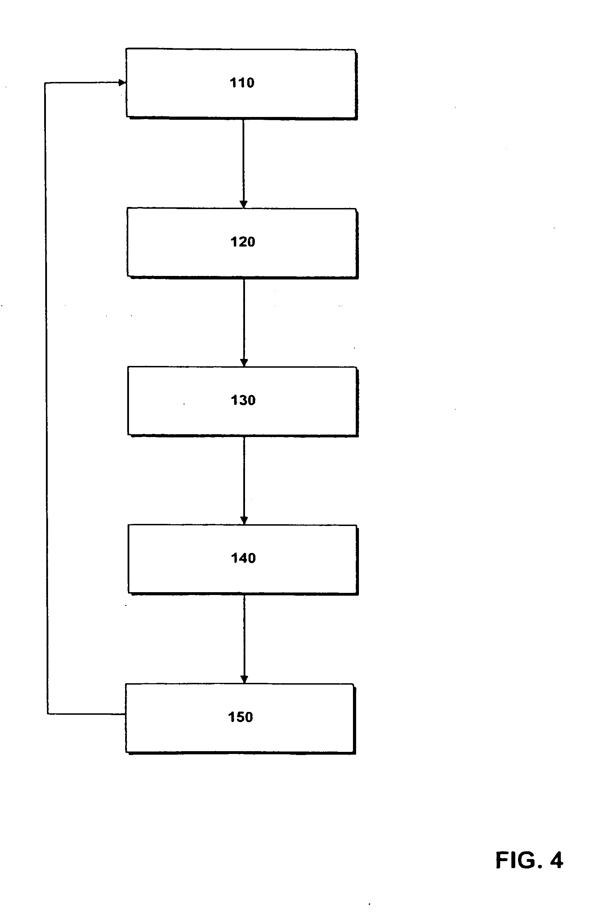

Fig. 4 shows a flowchart schematically representing a method of operating a night-view system according to the principles as described above. As already indicated, the method generally involves processing of the night-view image so as to detect the course of the road on which the vehicle moves, said processing being accomplished taking into account information on the course of the road as provided by the navigation device 15.

In step 110, the video image, i.e. night-view image, of the vehicle environment is provided. The image preferably covers the area in front of the vehicle, in the direction in which the vehicle moves, as this area is of particular relevance to the driver. Of course, it would also be possible to provide an image of the area behind the vehicle or on the left or right sides of the vehicle. Preferably, the image is recorded in the far-infrared range, near-infrared range, or a combination thereof. It is to be understood that the video image actually comprises a sequence of images, which are recorded and further processed in real time.

In step 120, information is retrieved from the navigation device, which relates to the course of the road on which the vehicle moves. The information includes information on the vehicle position relative to the course of the road, information on the presence of junctions or crossings in the course of the road, information on the width of the road, and a height information of the course of the road. Further, the information includes data on the attitude and orientation of the vehicle and/or information on a user-selected navigation route. The retrieved information is conditioned for the use in processing of the video image.

In step 130, an initial processing of the video image is carried out, which is essentially based on contrast information. At this stage, the information received from the navigation device is taken into account by suitably adjusting and positioning evaluation windows as described in connection with Figs. 2A and 2B.

In step 140, an expected course of the road is calculated on the basis of the information received from the navigation device. The calculation is based on the general principles of geometric optics and the field of view of the night-view sensor. The expected course of the road is matched and compared with structures identified in said initial processing. In particular, a road edge identified in step 130 may be aligned with a calculated expected road edge. Further, the evaluation windows are adjusted and/or repositioned, and a refined processing of the video image on the basis of contrast information is carried out so as to verify and supplement the results of the initial processing. A detected course of the road is output on the basis of the results of the initial and refined processing. Even in the case that no structures could be identified in the initial and refined processing, it is possible to output a course of the road on the basis of the expected course of the road.

In step 150, the video image and the detected course of the road are displayed to the driver. Preferably, the detected course of the road is superposed onto the video image so as to facilitate orientation, e.g. using a head-up display.

Preferably, in steps 120-140, the video image is also processed so as to identify objects near or on the course of the road. In this case, the detected objects are highlighted in the displayed video image and/or an acoustical warning is provided.

After step 150, the method is repeated so as to continuously evaluate and display the video image and the detected course of the road. In this respect, it is advantageous to recursively utilize the results of previous evaluation cycles.

It is to be understood that the above-described examples are intended for illustrating the present invention. However, the invention is not limited thereto. Rather, various modifications and variations are possible within the scope of the invention. For example, the type of night-view sensor and/or the type of navigation device may be selected according to the specific requirements. Further, a variety of suitable image processing techniques may be adopted so as to be used within the described method. The navigation device may be an integrated component of the night-view system or may be a separate component, for example a conventional navigation system or a part thereof. The navigation device may include a satellite navigation function. However, it is also possible to utilize other navigation systems, which allow for determining the position of the vehicle with respect to a digital map representation. Different types of display devices may be used, depending on the type of vehicle and other design aspects. Further, the night-view system and navigation device may be integrated within a multimedia system of the vehicle.

To summarize, methods and systems have been described by means of which the reliability and accuracy of a night-view system is significantly increased. Thereby, the security and the driver's comfort when driving at night or darkness, or generally at poor sight conditions, are significantly improved.

## Claims

1. A method of operating a night-view system in a vehicle, comprising:
providing a video image of the vehicle environment using a night-view sensor (12),
retrieving information on the course of a road (5) on which the vehicle moves from a navigation device (15),
processing the video image so as to detect the course of the road (5) taking into account the information retrieved from the navigation device (15), said processing involving identifying an edge of the road (5) in the video image, and
displaying the video image and the detected course of the road (5) on a display device (20) with the identified edge of the road (5) superposed onto the video image.

2. The method according to claim 1,
**characterized by** comprising:
processing the video image so as to detect objects (6) near or on the course of the road (5), and
providing a warning to a vehicle user if an object (6) is detected near or on the course of the road (5).

3. The method according to claim 2,
**characterized in that**
said warning is provided by means of an optical signal on the display device (20).

4. The method according to claim 2 or 3,
**characterized in that**
said warning is provided by means of an acoustical signal.

5. The method according to any one of the preceding claims,
**characterized in that** the information retrieved from the navigation device (15) includes information on the vehicle position relative to the course of the road (5).

6. The method according to any one of the preceding claims,
**characterized in that**
the information retrieved from the navigation device (15) includes a height information of the course of the road (5).

7. The method according to any one of the preceding claims,
**characterized in that**
the information retrieved from the navigation device (15) includes information on the presence of crossings or junctions in the course of the road (5).

8. The method according to any one of the preceding claims,
**characterized in that,**
the information retrieved from the navigation device (15) includes information on the width of the road.

9. The method according to any one of the preceding claims,
**characterized in that**
the information retrieved from the navigation device (15) includes information on a user-selected navigation route.

10. The method according to any one of the preceding claims,
**characterized by** comprising:
processing the video image so as to detect the course of the road (5) on the basis of contrast information, and
matching the detected course of the road (5) with an expected course of the road calculated on the basis of the information received from the navigation device (15).

11. The method according to any one of the preceding claims,
**characterized in that**
said processing of the video image involves using evaluation windows which define a portion of the video image.

12. The method according to claim 11,
**characterized by** comprising:
adjusting said evaluation windows on the basis of the information retrieved from the navigation device (15).

13. The method according to claim 12,
**characterized in that**
said adjusting involves adjusting the number of the evaluation windows (8), the size of the evaluation windows (8), or the position of the evaluation windows (8).

14. The method according to any one of the preceding claims,
**characterized in that**
the same display device (20) is used to display information of the navigation device (15).

15. A night-view system, comprising:
a night-view sensor (12) for providing a video image of the vehicle environment,
video processing means (14) coupled to the night-view sensor (12) so as to receive the video image and coupled to a navigation device (15) so as to receive information on the course of a road (5) on which the vehicle moves, the video processing means (14) being configured to process the video image taking into account the information received from the navigation device (15) so as to detect the course of the road (5) and to identify an edge of the road (5), and
a display device (20) for displaying the video image and the detected course of the road (5) with the identified edge of the road (5) superposed onto the video image.

16. The night-view system according to claim 15,
**characterized by**
data processing means (13) configured to retrieve said information on the course of the road (5) from the navigation device (15).

17. The night-view system according to claim 15 or 16,
**characterized in that**
the night-view system comprises the navigation device (15).

18. The night-view system according to any one of claims 15 to 17,
**characterized in that**
the navigation device (15) comprises a satellite navigation function.

19. The night-view system according to any one of claims 15 to 18,
**characterized in that**
the navigation device (15) comprises a storage device for storing a digital map representation including said information on the course of the road (5).

20. The night-view system according to any one of claims 15 to 19,
**characterized in that**
the night-view sensor (12) operates in the far-infrared range of the electromagnetic spectrum.

21. The night-view system according to any one of claims 15 to 20,
**characterized in that**
the night-view sensor (12) operates in the near-infrared range of the electromagnetic spectrum.

22. The night-view system according to any one of claims 15 to 21,
**characterized in that**
the display device (20) comprises a head-up display.

23. The night-view system according to any one of claims 15 to 22,
**characterized by**
an acoustical output device (30) for providing a warning to a vehicle user.

24. The night-view system according to any one of claims 15 to 23,
**characterized in that**
the night-view system is configured to operate according to the method as defined in any one of claims 1 to 15.

25. A motor vehicle,
**characterized in that**
the motor vehicle comprises a night-view system according to any one of claims 15 to 24.

26. The motor vehicle according to claim 25,
**characterized in that**
the motor vehicle further comprises a navigation system and said display device (20) is a common display device of the night-view system and of the navigation system.

## Patentansprüche

1. Verfahren zum Betreiben eines Nachtsichtsystems in einem Fahrzeug, umfassend:
Bereitstellen eines Videobilds der Fahrzeugumgebung unter Verwendung eines Nachsichtsensors (12),
Abfragen einer Information über den Verlauf einer Straße (5), auf welcher sich das Fahrzeug bewegt, von einer Navigationsvorrichtung (15),
Verarbeiten des Videobildes unter Berücksichtigung der von der Navigationsvorrichtung (15) abgefragten Information, um den Verlauf der Straße (5) zu erfassen, wobei die Verarbeitung ein Identifizieren eines Rands der Straße (5) in dem Videobild einbezieht, und
Anzeigen des Videobilds und des erfassten Verlaufs der Straße (5) auf einer Anzeigevorrichtung (20) mit dem identifizierten Rand der Straße (5), welcher dem Videobild überlagert wird.

2. Verfahren nach Anspruch 1,
**dadurch gekennzeichnet, dass** es umfasst:
Verarbeiten des Videobilds, um Objekte (6) in der Nähe oder auf dem Verlauf der Straße (5) zu erfassen, und
Bereitstellen einer Warnung für einen Fahrzeugbenutzer, wenn ein Objekt (6) in der Nähe oder auf dem Verlauf der Straße (5) erfasst wurde.

3. Verfahren nach Anspruch 2,
**dadurch gekennzeichnet, dass**
die Warnung mittels eines optischen Signals auf der Anzeigevorrichtung (20) bereitgestellt wird.

4. Verfahren nach Anspruch 2 oder 3,
**dadurch gekennzeichnet, dass**
die Warnung mittels eines akustischen Signals bereitgestellt wird.

5. Verfahren nach einem der vorhergehenden Ansprüche,
**dadurch gekennzeichnet, dass**
die von der Navigationsvorrichtung (15) abgefragte Information eine Information über die Fahrzeugposition bezogen auf den Verlauf der Straße (5) aufweist.

6. Verfahren nach einem der vorhergehenden Ansprüche,
**dadurch gekennzeichnet, dass**
die von der Navigationsvorrichtung (15) abgefragte Information eine Höheninformation des Verlaufs der Straße (5) aufweist.

7. Verfahren nach einem der vorhergehenden Ansprüche,
**dadurch gekennzeichnet, dass**
die von der Navigationsvorrichtung (15) abgefragte Information eine Information über das Vorhandensein von Kreuzungen oder Einmündungen in dem Verlauf der Straße (5) aufweist.

8. Verfahren nach einem der vorhergehenden Ansprüche,
**dadurch gekennzeichnet, dass**
die von der Navigationsvorrichtung (15) abgefragte Information eine Information über die Breite der Straße aufweist.

9. Verfahren nach einem der vorhergehenden Ansprüche,
**dadurch gekennzeichnet, dass**
die von der Navigationsvorrichtung (15) abgefragte Information eine Information über eine benutzergewählte Navigationsroute aufweist.

10. Verfahren nach einem der vorhergehenden Ansprüche,
**dadurch gekennzeichnet, dass** es umfasst:
Verarbeiten des Videobilds, um den Verlauf der Straße (5) auf der Grundlage einer Kontrastinformation zu erfassen, und
Abgleichen des erfassten Verlaufs der Straße (5) mit einem erwarteten Verlauf der Straße, welcher auf der Grundlage der von der Navigationsvorrichtung (15) abgefragten Information berechnet wird.

11. Verfahren nach einem der vorhergehenden Ansprüche,
**dadurch gekennzeichnet, dass**
das Verarbeiten des Videobilds eine Verwendung von Auswertefenstern einbezieht, welche einen Abschnitt des Videobilds definieren.

12. Verfahren nach Anspruch 11,
**dadurch gekennzeichnet, dass** es umfasst:
Einstellen der Auswertefenster auf der Grundlage der von der Navigationsvorrichtung (15) abgefragten Information.

13. Verfahren nach Anspruch 12,
**dadurch gekennzeichnet, dass**
das Einstellen ein Einstellen der Anzahl der Auswertefenster (8), der Größe der Auswertefenster (8) oder der Position der Auswertefenster (8) einbezieht.

14. Verfahren nach einem der vorhergehenden Ansprüche,
**dadurch gekennzeichnet, dass**
dieselbe Anzeigevorrichtung (20) verwendet wird, um eine Information der Navigationsvorrichtung (15) anzuzeigen.

15. Nachtsichtsystem, umfassend:
einen Nachtsichtsensor (12) zum Bereitstellen eines Videobilds der Fahrzeugumgebung,
ein Videoverarbeitungsmittel (14), welches mit dem Nachtsichtsensor (12) gekoppelt ist, um das Videobild zu empfangen, und welches mit einer Navigationsvorrichtung (15) gekoppelt ist, um eine Information über den Verlauf einer Straße (5), auf welcher sich das Fahrzeug bewegt, zu empfangen, wobei das Videoverarbeitungsmittel (14) ausgestaltet ist, das Videobild unter Berücksichtigung der von der Navigationsvorrichtung (15) empfangenen Information zu verarbeiten, um den Verlauf der Straße (5) zu erfassen und einen Rand der Straße (5) zu identifizieren, und
eine Anzeigevorrichtung (20) zum Anzeigen des Videobilds und des erfassten Verlaufs der Straße (5) mit dem identifizierten Rand der Straße (5), welcher dem Videobild überlagert ist.

16. Nachtsichtsystem nach Anspruch 15,
**gekennzeichnet durch**
ein Datenverarbeitungsmittel (13), welches ausgestaltet ist, die Information über den Verlauf der Straße (5) von der Navigationsvorrichtung (15) abzufragen.

17. Nachtsichtsystem nach Anspruch 15 oder 16,
**dadurch gekennzeichnet, dass**
das Nachtsichtsystem die Navigationsvorrichtung (15) umfasst.

18. Nachtsichtsystem nach einem der Ansprüche 15-17,
**dadurch gekennzeichnet, dass**
die Navigationsvorrichtung (15) eine Satellitennavigationsfunktion umfasst.

19. Nachtsichtsystem nach einem der Ansprüche 15-18,
**dadurch gekennzeichnet, dass**
die Navigationsvorrichtung (15) eine Speichervorrichtung zum Speichern einer digitalen Kartendarstellung umfasst, welche die Information über den Verlauf der Straße (5) aufweist.

20. Nachtsichtsystem nach einem der Ansprüche 15-19,
**dadurch gekennzeichnet, dass**
der Nachtsichtsensor (12) in dem fernen Infrarotbereich des elektromagnetischen Spektrums arbeitet.

21. Nachtsichtsystem nach einem der Ansprüche 15-20,
**dadurch gekennzeichnet, dass**
der Nachtsichtsensor (12) in dem nahen Infrarotbereich des elektromagnetischen Spektrums arbeitet.

22. Nachsichtsystem nach einem der Ansprüche 15-21,
**dadurch gekennzeichnet, dass**
die Anzeigevorrichtung (20) ein Head-up-Display umfasst.

23. Nachtsichtsystem nach einem der Ansprüche 15-22,
**gekennzeichnet durch**
eine akustische Ausgabevorrichtung (30) zum Bereitstellen einer Warnung für einen Fahrzeugbenutzer.

24. Nachtsichtsystem nach einem der Ansprüche 15-23,
**dadurch gekennzeichnet, dass**
das Nachtsichtsystem ausgestaltet ist, gemäß dem Verfahren wie es in einem der Ansprüche 1-15 definiert ist, zu arbeiten.

25. Kraftfahrzeug,
**dadurch gekennzeichnet, dass**
das Kraftfahrzeug ein Nachtsichtsystem nach einem der Ansprüche 15-24 umfasst.

26. Kraftfahrzeug nach Anspruch 25,
**dadurch gekennzeichnet, dass**
das Kraftfahrzeug ferner ein Navigationssystem umfasst, und dass die Anzeigevorrichtung (20) eine gemeinsame Anzeigevorrichtung des Nachtsichtsystems und des Navigationssystems ist.

## Revendications

1. Procédé d'exploitation d'un système de vision de nuit dans un véhicule, comprenant:
la fourniture d'une image vidéo de l'environnement du véhicule à l'aide d'un capteur de vision de nuit (12),
l'extraction, à partir d'un dispositif de navigation (15), d'une information sur le tracé d'une route (5) sur laquelle le véhicule se déplace,
le traitement de l'image vidéo pour détecter le tracé de la route (5) en tenant compte de l'information extraite du dispositif de navigation (15), ledit traitement comportant l'identification d'un bord de la route (5) sur l'image vidéo, et
l'affichage de l'image vidéo et du tracé détecté de la route (5) sur un dispositif de visualisation (20), avec le bord de la route (5) identifié superposé sur l'image vidéo.

2. Procédé selon la revendication 1, **caractérisé en ce qu'**il comprend:
le traitement de l'image vidéo pour détecter des objets (6) proche du ou sur le tracé de la route (5), et
la fourniture d'un avertissement à un utilisateur du véhicule lorsqu'un objet (6) est détecté proche du ou sur le tracé de la route (5).

3. Procédé selon la revendication 2, **caractérisé en ce que** ledit avertissement est fourni par l'intermédiaire d'un signal optique sur le dispositif de visualisation (20).

4. Procédé selon la revendication 2 ou 3, **caractérisé en ce que** ledit avertissement est fourni par l'intermédiaire d'un signal acoustique.

5. Procédé selon l'une quelconque des revendications précédentes, **caractérisé en ce que** l'information extraite du dispositif de navigation (15) inclut une information sur la position du véhicule par rapport au tracé de la route (5).

6. Procédé selon l'une quelconque des revendications précédentes, **caractérisé en ce que** l'information extraite du dispositif de navigation (15) inclut une information de hauteur du tracé de la route (5).

7. Procédé selon l'une quelconque des revendications précédentes, **caractérisé en ce que** l'information extraite du dispositif de navigation (15) inclut une information sur la présence de carrefours ou d'embranchements sur le tracé de la route (5).

8. Procédé selon l'une quelconque des revendications précédentes, **caractérisé en ce que** l'information extraite du dispositif de navigation (15) inclut une information sur la largeur de la route.

9. Procédé selon l'une quelconque des revendications précédentes, **caractérisé en ce que** l'information extraite du dispositif de navigation (15) inclut une information sur un parcours de navigation sélectionné par l'utilisateur.

10. Procédé selon l'une quelconque des revendications précédentes, **caractérisé en ce qu'**il comprend:
le traitement de l'image vidéo pour détecter le tracé de la route (5) sur la base d'une information de contraste, et
l'alignement du tracé détecté de la route (5) avec un tracé attendu de la route calculé sur la base de l'information reçue du dispositif de navigation (15).

11. Procédé selon l'une quelconque des revendications précédentes, **caractérisé en ce que** ledit traitement de l'image vidéo comporte l'utilisation de fenêtres d'évaluation qui définissent une portion de l'image vidéo.

12. Procédé selon la revendication 11, **caractérisé en ce qu'**il comprend:
l'ajustement desdites fenêtres d'évaluation sur la base de l'information extraite du dispositif de navigation (15).

13. Procédé selon la revendication 12, **caractérisé en ce que** ledit ajustement comporte l'ajustement du nombre des fenêtres d'évaluation (8), la taille des fenêtres d'évaluation (8), ou la position des fenêtres d'évaluation (8).

14. Procédé selon l'une quelconque des revendications précédentes, **caractérisé en ce que** le même dispositif de visualisation (20) est utilisé pour afficher une information du dispositif de navigation (15).

15. Système de vision de nuit, comprenant:
un capteur de vision de nuit (12) pour fournir une image vidéo de l'environnement du véhicule,
des moyens de traitement vidéo (14) couplés au capteur de vision de nuit (12) pour recevoir l'image vidéo et couplés à un dispositif de navigation (15) pour recevoir une information sur le tracé d'une route (5) sur laquelle se déplace le véhicule, les moyens de traitement vidéo (14) étant configurés pour traiter l'image vidéo en tenant compte de l'information reçue du dispositif de navigation (15) pour détecter le tracé de la route (5) et pour identifier un bord de la route (5), et
un dispositif de visualisation (20) pour afficher l'image vidéo et le tracé détecté de la route (5), le bord identifié de la route (5) étant superposé sur l'image vidéo.

16. Système de vision de nuit selon la revendication 15, **caractérisé par** des moyens de traitement de données (13) configurés pour extraire ladite information sur le tracé de la route (5) du dispositif de navigation (15).

17. Système de vision de nuit selon la revendication 15 ou 16, **caractérisé en ce que** le système de vision de nuit comprend le dispositif de navigation (15).

18. Système de vision de nuit selon l'une quelconque des revendications 15 à 17, **caractérisé en ce que** le dispositif de navigation (15) comprend une fonction de navigation par satellite.

19. Système de vision de nuit selon l'une quelconque des revendications 15 à 18, **caractérisé en ce que** le dispositif de navigation (15) comprend un dispositif de mémorisation pour mémoriser une représentation de carte routière numérique incluant ladite information sur le tracé de la route (5).

20. Système de vision de nuit selon l'une quelconque des revendications 15 à 19, **caractérisé en ce que** le capteur de vision de nuit (12) opère dans l'infrarouge lointain du spectre électromagnétique.

21. Système de vision de nuit selon l'une quelconque des revendications 15 à 20, **caractérisé en ce que** le capteur de vision de nuit (12) opère dans le proche infrarouge du spectre électromagnétique.

22. Système de vision de nuit selon l'une quelconque des revendications 15 à 21, **caractérisé en ce que** le dispositif de visualisation (20) comprend un affichage tête haute.

23. Système de vision de nuit selon l'une quelconque des revendications 15 à 22, **caractérisé par** un dispositif de sortie acoustique (30) pour fournir un avertissement à un utilisateur de véhicule.

24. Système de vision de nuit selon l'une quelconque des revendications 15 à 23, **caractérisé en ce que** le système de vision de nuit est configuré pour fonctionner selon le procédé tel que défini dans l'une quelconque des revendications 1 à 15.

25. Véhicule automobile, **caractérisé en ce que** le véhicule automobile comprend un système de vision de nuit selon l'une quelconque des revendications 15 à 24.

26. Véhicule automobile selon la revendication 25, **caractérisé en ce que** le véhicule automobile comprend en outre un système de navigation et que ledit dispositif de visualisation (20) est un dispositif de visualisation commun du système de vision de nuit et du système de navigation.
